# EUROPEAN PATENT APPLICATION

(11) **EP 4 825 166 A1**
(43) Date of publication of application: **21.10.2026**
(21) Application number: 26165740.7
(22) Date of filing: 18.03.2026
(51) Int. Cl.: A01K 63/04

(54) **FLOATING TREATMENT APPARATUS FOR TREATMENT OF A LIQUID BASIN BY BLOWING A GAS FLUID**

(30) Priority: 14.04.2025 IT 202500008265
(71) Applicant: Chitarra, Guiseppe, 25124 Brescia (IT)
(72) Inventor: Chitarra, Guiseppe, 25124 Brescia (IT)
(74) Representative: Leihkauf, Steffen Falk

(57) **Abstract**

A floating treatment apparatus (1) for treating a basin of a liquid (100) by insufflating a gaseous treatment fluid, comprising: at least one floating hull (2) extending along a respective main hull axis (S-S) arranged according to a longitudinal direction (3) and defining a front end portion (4), or bow, and an opposite rear end portion (5), or stern; at least one treatment unit (9) connected to said at least one floating hull (2), adapted to remain, in use, submerged in said liquid (100); wherein said at least one treatment unit (9) comprises: an outer tubular element (10) extending along a central axis (C-C) parallel to said main hull axis (S-S), defining an inlet end opening (11) facing the bow, and an opposite outlet end opening (12) facing the stern, and further defining a radially inner lateral surface (13) facing said central axis (C-C); a diffuser element (20) for diffusing a gaseous fluid having an elongated shape according to a diffuser element axis, said diffuser element (20) being arranged inside said outer tubular element (10) and defining a radially outer lateral surface (21) facing said radially inner lateral surface (13), a tubular gap (22) being defined between said radially inner surface (13) and said radially outer surface (21), said diffuser element (20) being made of a porous material adapted to diffuse said gaseous fluid through its pores across said radially outer lateral surface (21), and comprising an internal channel (31) for distributing said gaseous fluid into said diffuser element (20) from said supply duct (30) towards said radially outer surface (21), and a supply duct (30) for the introduction of said gaseous fluid, connected to a source (32) of said gaseous fluid; a mixing element (40) having a helical shape defining a helical axis coaxial to said central axis (C-C), and extending into said tubular gap (22) between said radially inner surface (13) and said radially outer surface (21), said mixing element (40) being integrally arranged with respect to said diffuser element (20) and said outer tubular element (10).

## Description

### Field of the invention

The present invention relates to a floating apparatus for treating a basin of a liquid to be treated, for example for the oxygenation of a basin of water.

### Background art

Various contexts are known wherein it is required to treat a large quantity of a liquid contained in a basin by means of the insufflation therein of a gaseous fluid.

For example, in the field of fish farming or the farming of mollusks or crustaceans, the need to solubilize oxygen gas in the water is well known, so that the farmed organisms may take it up in their life cycle.

The quantity of oxygen which is required to be diffused into the farming tank or basin is the greater the larger the tank or basin, and the greater the number of organisms which it is intended to farm in the unit of volume, thus, in order to guarantee high productivity it is necessary to diffuse a high quantity of oxygen into the farming water.

Sometimes it is required to oxygenate an entire lagoon that extends over many hectares, such as, for example, the Orbetello lagoon.

Various attempts have been made to satisfy the aforesaid need, by arranging a plurality of static oxygenation stations at various points distributed along the extension of the lagoon.

However, this solution has the disadvantage of having to use a large number of distributed oxygenation stations, thus having to incur very high costs of purchase, placement and maintenance thereof.

On the other hand, a high oxygen supply must be as economical as possible, so as to contain the production costs of the fish product.

A need is, thus, perceived to provide an apparatus capable of oxygenating a large area of a basin of liquid to be treated, in particular water, or a lagoon, avoiding the need to arrange a large number of static oxygenation stations.

### Summary of the invention

The object of the present invention is to devise and provide a floating treatment apparatus, allowing the above-mentioned needs to be met and at least partially overcoming the drawbacks complained of above with reference to the prior art.

In particular, it is an object of the present invention to provide a floating treatment apparatus capable of treating, in particular oxygenating, a large area of a basin of liquid to be treated, in particular water or a lagoon, avoiding the need to arrange a large number of static oxygenation stations.

These and further objects and advantages are achieved by means of a floating treatment apparatus according to independent claim 1.

Further objects, solutions, and advantages are present in the embodiments described below and claimed in the dependent claims.

### Brief description of the drawings

The invention will be shown below by the description of embodiments thereof, given by way of non-limiting example, with reference to the accompanying drawings, in which:
- Figure 1 shows a diagrammatic view from below of an apparatus according to the invention, comprising two floating hulls, a treatment unit interposed between them without propulsion, wherein each of the two hulls has its own propulsion unit;
- Figure 2 shows a diagrammatic front view of the apparatus in Figure 1;
- Figure 3 shows a diagrammatic view of an apparatus according to the invention, comprising two floating hulls, and a treatment unit interposed between them, in which a propulsion unit is integrated into the treatment unit;
- Figure 4 shows a diagrammatic sectional view of a treatment unit of the apparatus in Figure 3, wherein a propulsion unit is integrated into the treatment unit;
- Figure 5 shows a diagrammatic view of an apparatus according to the invention, comprising two floating hulls, a treatment unit interposed between them without propulsion, and two further treatment units arranged laterally on the outside of the two hulls with respect to the treatment unit interposed between the hulls;
- Figure 6 shows a diagrammatic front view of the apparatus in Figure 5;

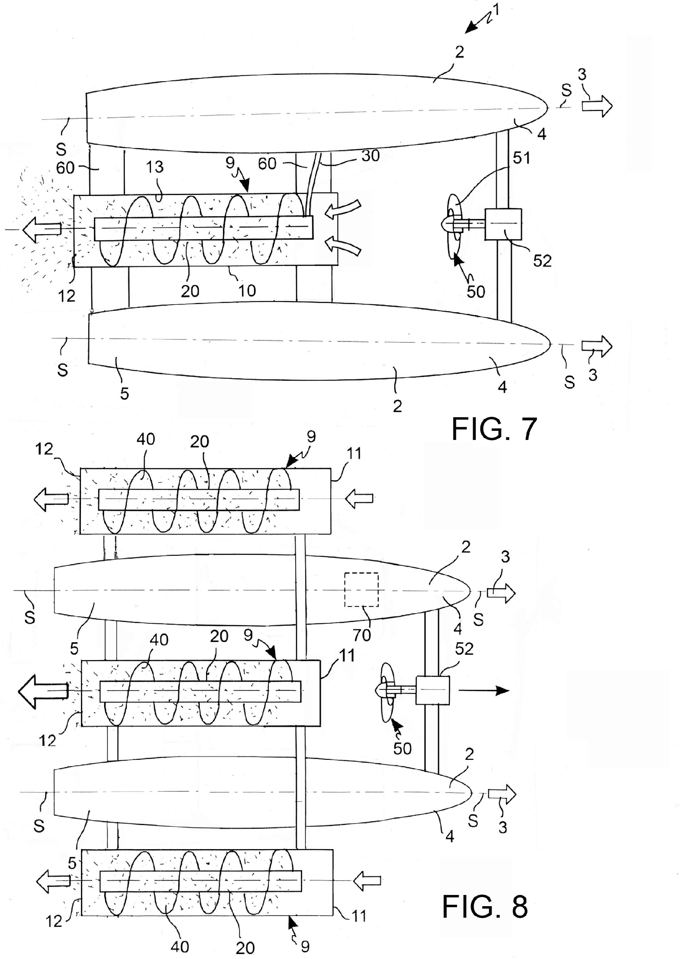

- Figure 7 shows a diagrammatic view of the apparatus in Figure 1, wherein a central propulsion unit is associated with the hulls, arranged upstream with respect to the treatment unit, in particular wherein the outlet opening of the treatment unit is in a rearward position with respect to the propulsion unit according to the advancement direction of the hulls.
- Figure 8 shows a diagrammatic view of an apparatus according to the invention, comprising two hulls and three treatment units, wherein a propulsion unit is provided, fixed to the hulls and arranged separate from the treatment units and upstream of the treatment units, wherein the outlet opening of the treatment unit is downstream with respect to said propulsion unit.

### Description of preferred embodiments

With reference to the figures, a floating treatment apparatus for treating a basin of a liquid by insufflating a gaseous treatment fluid, according to the invention, is indicated overall by reference 1.

According to a preferred application, the basin is a natural or artificial water basin, which may also be large area, and the gaseous treatment fluid is oxygen gas or air.

Sometimes, in fact, it is required to oxygenate a large water basin, for example a lagoon, in which fish, crustaceans, mollusks, etc. are farmed.

The floating treatment apparatus 1 comprises at least one floating hull 2 extending along a respective main hull axis S-S arranged according to a longitudinal direction 3 and defining a front end portion 4, or bow, and an opposite rear end portion 5, or stern.

The floating treatment apparatus 1 comprises at least one treatment unit 9 connected to said at least one floating hull 2, adapted to remain, in use, submerged in said liquid 100.

The at least one treatment unit 9 comprises an outer tubular element 10 extending along a central axis C-C parallel to said main hull axis S-S, defining an inlet end opening 11 facing the bow, and an opposite outlet end opening 12 facing the stern, and further defining a radially inner lateral surface 13 facing said central axis C-C.

The at least one treatment unit 9 further comprises a diffuser element 20 for diffusing a gaseous fluid, having an elongated shape along a diffuser element axis, preferably rectilinear, preferably parallel to, for example coaxial with, said central axis C-C.

The diffuser element 20 is arranged within said outer tubular element 10 and defines a radially outer lateral surface 21 facing said radially inner lateral surface 13.

A tubular gap 22 is defined between the radially inner surface 13 and the radially outer surface 21.

The diffuser element 20 is made of a porous material adapted to diffuse said gaseous fluid through its pores across said radially outer lateral surface 21.

According to an embodiment, the porous material is made of porous resin.

According to an embodiment, such resin is highly porous, preferably having a density comprised between about 0.9 and 1 g/cm3, and/or even more preferably said porous resin has a multitude of pores having diameters comprised between 6 and 100 microns, through which said gaseous fluid is capable of exiting.

Such material, thus, advantageously, allows homogeneous diffusion of the gaseous fluid toward the liquid medium, in particular through bubbles of sizes comparable to those of the pores of the resin, thus very fine.

Preferably, the resinous material of which the porous material diffuser 20 is made has a glass transition (tg) temperature of about 115°C and a mechanical compressive strength of 30 N/mm2. Further, it has, advantageously, a tensile strength of 10 N/mm2.

By way of example, the diffuser 20 may be manufactured using a resin having the following composition by weight:
- polymethyl methacrylate beads of 50-100 microns: 55.0 %
- water: 24.0 %
- methyl methacrylate: 11.645 %
- styrene: 3.90 %
- 2-hydroxymethyl methacrylate: 1.8 %
- benzoyl peroxide-additivated beads 1.5 %
- trimethylolpropane triacrylate: 1.0 %
- ethoxylated surfactant: 0.0 %
- ethylene glycol - propylene glycol adipate: 0.16 %
- N, N-dimethyl-p-toluidine: 0.08%
- antifoam agent: 0.015%.

The above-mentioned components are readily commercially available to a person skilled in the art.

Further, they may vary the composition of the indicated resin by using analogous products, or by varying the indicated percentages, so as to obtain a resin still having the properties indicated above.

The diffuser element 20 comprises an internal channel 31 for distributing the gaseous fluid into the diffuser element 20 from the supply duct 30 toward the radially outer surface 21, and a supply duct 30 for the introduction of said gaseous fluid, connected to a source 32 of said gaseous fluid, for example a sealed pressurized tank, such as a cylinder, or an air compressor, or an oxygen generator.

An apparatus according to the invention allows treating a basin having a surface area of hectares with a tank of 2000 Kg of oxygen, or by means of air supplied by a blower that could transfer about 12-15% of the oxygen in the air for each meter of head.

According to an embodiment, said internal channel is, or comprises, a cylindrical cavity coaxial with said axis of the diffuser.

According to an embodiment, said inner cavity is a closed cavity having as the only opening said supply duct 30 and said pores.

According to an embodiment, the diffuser element 20 has a side wall between said cavity and said radially outer side wall, having constant thickness.

According to an embodiment, the diffuser element 20 has a tubular shape.

The treatment unit 9 comprises a mixing element 40 having a helical shape, defining a helical axis coaxial to said central axis C-C, and extending into said tubular gap 22 between said radially inner surface 13 and said radially outer surface 21.

The mixing element 40 is integrally arranged with the diffuser element 20 and the outer tubular element 10.

According to an embodiment, the mixing element 40 is fixed to the diffuser element 20 as a single body, and can be assembled in the tubular element 10 by sliding such single body into the tubular element 10 along its axis C-C. In this case along the outer edge of the helical mixing element 40 a sealing gasket may be provided, preferably linear.

According to another embodiment, the mixing element 40 is fixed to the outer tubular element 10 and has a central passage for the insertion of the diffuser element 20.

According to an embodiment, the mixing element 40 comprises a metal sheet helically wound around said diffuser element 20.

The mixing element 40 helps the fluid to flow from the inlet end opening 11 towards said outlet end opening 12 along a helical path wound in a helix around the diffuser element 20, having a length much greater than the length of the diffuser element 20 along its axis.

According to an embodiment, said mixing element 40 having a helical shape has a helix pitch, measured according to a direction parallel to the central axis C-C, having a value substantially equal to the outer diameter of said mixing element 40, measured orthogonally to said central axis C-C.

The aforesaid winding path occurs in contact with the radially outer surface 21 of the diffuser body 20, which radially outer surface 21 is adapted to dispense the gaseous fluid through the porous material.

This makes it possible to keep the liquid in contact with the diffuser element along its wound path, which is much greater than the axial length of the diffuser element 20, and, thus, makes it possible to diffuse into the liquid medium a rather high quantity of gaseous fluid, thus providing a high-efficiency diffuser assembly.

According to an embodiment, said mixing element 40 having a helical shape has a helix pitch, measured along a direction parallel to the central axis C-C, having a smaller value than the outer diameter of said mixing element 40, measured orthogonally to said central axis C-C, preferably designed as a function of a desired value of the flow speed of the liquid along its path along said mixing element 40.

In particular, the smaller the value of the helical pitch, the greater the speed of the liquid flow along the mixing element, and the greater the turbulence of the flow.

This solution makes it possible to considerably extend the length of the fluid path around the mixing element, allowing diffusion of a greater quantity of gaseous fluid into the liquid per unit of volume.

By contrast, this solution is not suitable for the oxygenation of a fish farm of delicate organisms such as shrimp, which, if drawn into the high-speed turbulent flow along the mixing element 40, would be damaged and/or killed.

According to an embodiment, said mixing element 40, having a helical shape, has a helix pitch, measured along a direction parallel to the central axis C-C, having a value greater than the outer diameter of said mixing element 40, measured orthogonally to said central axis C-C, preferably designed as a function of a desired value of the flow speed of the liquid along its path along said mixing element 40.

In particular, the greater the value of the helix pitch, the lower the speed of the liquid flow along the mixing element, and the lower the flow turbulence, gradually approaching a laminar flow condition.

This solution makes the use thereof possible in a fish farm of delicate organisms such as shrimp, which, should they be conveyed into the water flow along the mixing element, would not be damaged thereby, and would exit unscathed from the outlet opening of the outer tubular element 10, by virtue of the greater laminarity of the flow.

However, since the length of the path of fluid around the mixing element is reduced, the quantity of oxygen solubilized in the water is also smaller.

According to an embodiment, said mixing element 40 having a helical shape has a helix pitch, measured along a direction parallel to the central axis C-C, having a value comprised between 3/2 of the value of the diameter and 6 times the value of the diameter, preferably having a value about 3 times the value of the diameter.

This configuration allows a better compromise to be achieved between the quantity of oxygen solubilization in the water, and the welfare conditions of the farmed shrimps.

According to an embodiment, the floating treatment apparatus 1 comprises at least one propulsion unit 50 arranged to provide a thrust for navigation to said at least one hull along said longitudinal direction 3.

According to an embodiment, the floating apparatus 1 comprises a steering unit for controlling an advancement direction of said at least one hull 2, comprising an electronic control unit 70.

According to an embodiment, the electronic control unit 70 comprises a receiving device for a remote steering signal.

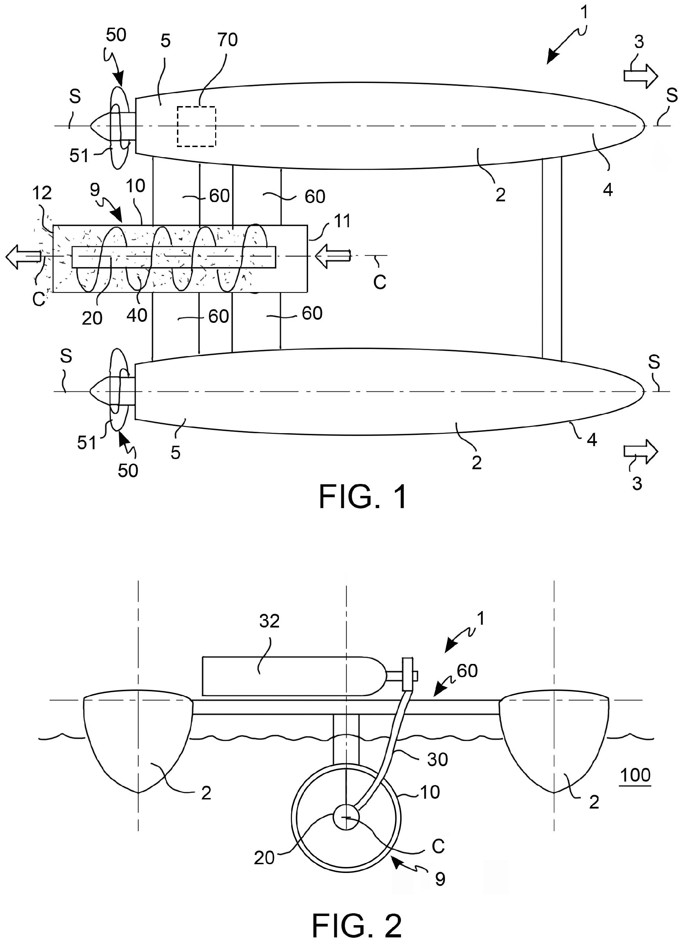

According to an embodiment, the at least one propulsion unit 50 is fixed to, or integrated into, said at least one hull 2, for example, as shown in Figure 1.

According to an embodiment, the at least one propulsion unit 50 comprises at least one propulsion propeller 51.

When the at least one propulsion unit is fixed to, or integrated into, said at least one hull 2, thus when the propeller is connected to the hull and is external with respect to the tubular element 10, it is arranged so that the outlet opening 12 of said tubular element 10 is arranged downstream of said at least one propeller 51 according to a direction that proceeds from bow 4 toward stern 5.

This arrangement makes it possible to protect the farmed organisms in the water basin, for example more preferably crustaceans such as shrimp, avoiding dragging them close to the propeller where they would inevitably be damaged or killed. Thereby, the crustaceans, or the shrimps that inadvertently enter the tubular element 10 pass through it unharmed along its entire length and exit from the outlet opening downstream of the propeller, where the water is thrust away from the propeller.

According to an embodiment, the at least one propulsion unit 50 is fixed to, or integrated into, a respective said at least one treatment unit 9.

According to an embodiment, the at least one propulsion unit 50 comprises a propulsion propeller 51 arranged inside said outer tubular element 10 rotatably about said central axis C-C with respect to said outer tubular element 10, and oriented so as to generate a forced thrust flow of said liquid into said outer tubular element 10, directed from said inlet end opening 11 towards said outlet end opening 12.

According to an embodiment, the at least one propulsion unit 50 comprises a rotary motor 52 connected to said propulsion propeller 51 to rotatably actuate said propulsion propeller 51.

According to an embodiment, the propulsion propeller 51 is arranged close to said inlet opening 11.

According to an embodiment, the rotary motor 52 is an electric motor.

According to an embodiment, the connecting structure 60 to which said outer tubular element 10 of said at least one treatment unit 9 is fixed, comprises fixing means 61 to fix said connecting structure 60 to said at least one hull 2.

According to an embodiment, the fastening means 61 are removable fixing means.

According to an embodiment, the fixing means 61 are of a quick coupling type.

Thereby, the at least one treatment unit 9, and/or the connecting structure 60 may be easily mounted or dismounted from the at least one hull, depending on the requirements.

Similarly, the at least one treatment unit having a propulsion unit, or active, may be easily replaced with another treatment unit without propulsion unit, or passive, and vice versa, depending on requirements.

According to an embodiment, the quick-coupling fixing means 61 comprise a bar integral with the at least one treatment unit and at least one sleeve bracket fixed to said at least one hull, configured to receive said bar therein.

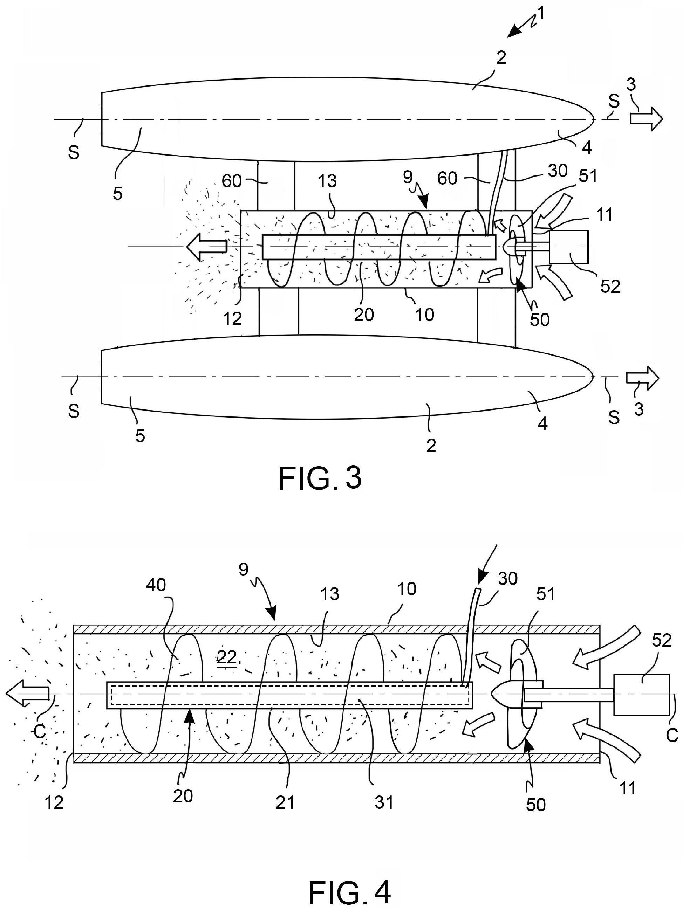

According to an embodiment, the at least one floating hull 2 is formed by two floating hulls 2 fixed to each other, parallel and spaced apart from one another, and wherein a treatment unit 9 of said at least one treatment unit 9 is centrally interposed between said two floating hulls 2. Some examples of such configuration are shown in Figures 1, 2, 3.

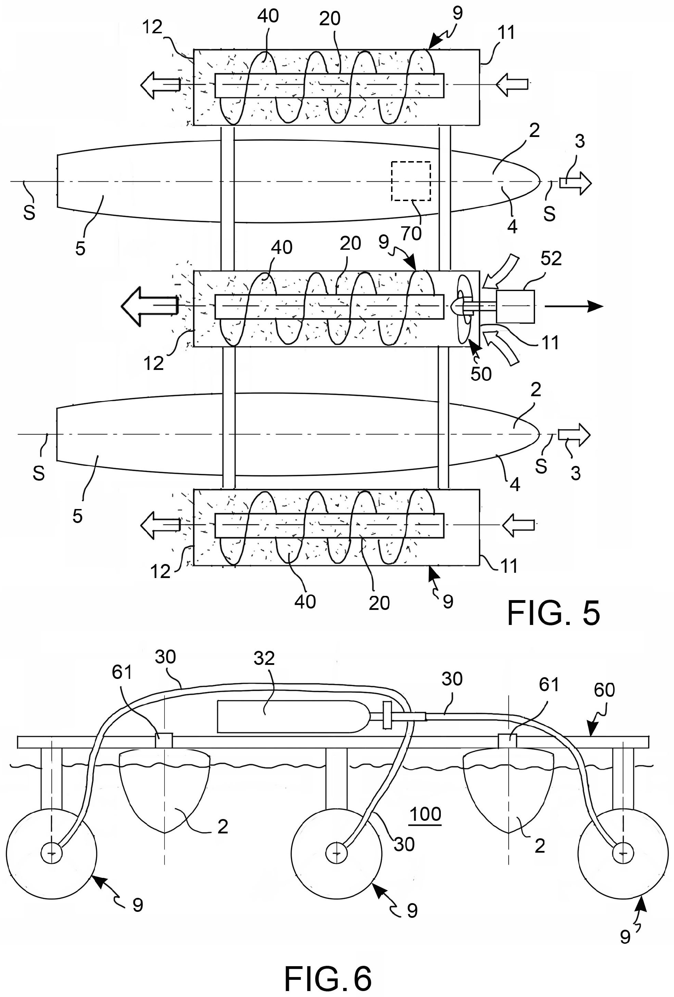

According to an embodiment, two further treatment units 9 of said at least one treatment unit 9 are arranged laterally outside with respect to said two floating hulls 2 on opposite sides with respect to said centrally interposed treatment unit 9. Some examples of such configurations are shown in Figures 5 and 6.

According to an embodiment, the centrally interposed treatment unit 9 comprises a propulsion unit 50, while said further two treatment units are devoid of a propulsion unit. An example of such a configuration is shown in Figure 5.

According to another embodiment, not shown in the Figures, the centrally interposed treatment unit 9 is devoid of a propulsion unit, while each of the further treatment units 9 comprises a respective propulsion unit 50.

In such a case, the electronic control unit 70 may be programmed to control the power of each of the two propulsion units 50 as a function of a desired navigation trajectory.

According to an embodiment, said at least one hull is formed by a single floating hull 2.

According to an embodiment, two treatment units 9 of said at least one treatment unit 9 are arranged laterally outside with respect to said single floating hull 2, on opposite sides with respect to said single floating hull 2.

Those skilled in the art may make changes and adaptations to the embodiments of the device described above or replace elements with others which are functionally equivalent in order to meet contingent needs without departing from the scope of the following claims. Each of the features described as belonging to a possible embodiment can be made irrespective of the other embodiments described.

## Claims

1. A floating treatment apparatus (1) for treating a basin of a liquid (100) by insufflating a gaseous treatment fluid, comprising:
- at least one floating hull (2) extending along a respective main hull axis (S-S) arranged according to a longitudinal direction (3) and defining a front end portion (4), or bow, and an opposite rear end portion (5), or stern,
- at least one treatment unit (9) connected to said at least one floating hull (2), adapted to remain, in use, submerged in said liquid (100),
wherein said at least one treatment unit (9) comprises:
- an outer tubular element (10) extending along a central axis (C-C) parallel to said main hull axis (S-S), defining an inlet end opening (11) facing the bow, and an opposite outlet end opening (12) facing the stern, and further defining a radially inner lateral surface (13) facing said central axis (C-C);
- a diffuser element (20) for diffusing a gaseous fluid having an elongated shape according to a diffuser element axis, said diffuser element (20) being arranged inside said outer tubular element (10) and defining a radially outer lateral surface (21) facing said radially inner lateral surface (13), a tubular gap (22) being defined between said radially inner surface (13) and said radially outer surface (21), said diffuser element (20) being made of a porous material adapted to diffuse said gaseous fluid through its pores across said radially outer lateral surface (21), and comprising an internal channel (31) for distributing said gaseous fluid into said diffuser element (20) from said supply duct (30) towards said radially outer surface (21), and a supply duct (30) for the introduction of said gaseous fluid, connected to a source (32) of said gaseous fluid;
- a mixing element (40) having a helical shape defining a helical axis coaxial to said central axis (C-C), and extending into said tubular gap (22) between said radially inner surface (13) and said radially outer surface (21), said mixing element (40) being integrally arranged with respect to said diffuser element (20) and said outer tubular element (10).

2. A floating treatment apparatus (1) according to claim 1, comprising at least one propulsion unit (50) arranged to provide said at least one hull with navigational thrust.

3. A floating treatment apparatus (1) according to claim 2, comprising a steering unit for controlling an advancement direction of said at least one hull (2), comprising an electronic control unit (70).

4. A floating treatment apparatus (1) according to claim 2, wherein said at least one propulsion unit (50) is fixed to, or integrated to, said at least one hull (2).

5. A floating treatment apparatus (1) according to claim 4, wherein said at least one propulsion unit (50) comprises at least one propulsion propeller (51), said outlet opening (12) of said tubular element (10) being arranged downstream of said at least one propeller (51) according to a direction going from bow (4) to stern (5).

6. A floating treatment apparatus (1) according to claim 2, wherein said at least one propulsion unit (50) is fixed to, or integrated into, a respective said at least one treatment unit (9).

7. A floating treatment apparatus (1) according to claim 6, wherein said at least one propulsion unit (50) comprises a propulsion propeller (51) arranged inside said outer tubular element (10) rotatably about said central axis (C-C) with respect to said outer tubular element (10), and oriented so as to generate a forced thrust flow of said liquid into said outer tubular element (10), directed from said inlet end opening (11) towards said outlet end opening (12) ;
- a rotary motor (52) connected to said propulsion propeller (51) to rotationally actuate said propulsion propeller (51).

8. A floating treatment apparatus (1) according to claim 7, wherein said propulsion propeller (51) is arranged close to said inlet opening (11).

9. A floating treatment apparatus (1) according to claim 7, wherein said rotary motor (52) is an electric motor.

10. A floating treatment apparatus (1) according to claim 1, comprising a connection structure (60) to which said outer tubular element (10) of said at least one treatment unit (9) is fixed, and comprising fixing means (61) to fix said connection structure (60) to said at least one hull (2).

11. A floating treatment apparatus (1) according to claim 10, wherein said fixing means (61) are removable fixing means.

12. A floating treatment apparatus (1) according to claim 11, wherein said fixing means (61) are of a quick coupling type.

13. A floating treatment apparatus (1) according to at least one preceding claim, wherein said at least one floating hull (2) is formed by two floating hulls (2) parallel to each other and spaced apart from each other, and wherein a treatment unit (9) of said at least one treatment unit (9) is centrally interposed between said two floating hulls (2).

14. A floating treatment apparatus (1) according to claim 13, wherein further two treatment units (9) of said at least one treatment unit (9) are arranged laterally outside with respect to said two floating hulls (2) on opposite sides with respect to said centrally interposed treatment unit (9).

15. A floating treatment apparatus (1), according to at least one of claims 1 to 12, wherein said at least one hull is formed by a single floating hull (2), wherein two treatment units (9) of said at least one treatment unit (9) are arranged laterally outside with respect to said single floating hull (2) on opposite sides with respect to said single floating hull (2).
